# EUROPEAN PATENT APPLICATION

(11) **EP 2 680 141 A1**
(43) Date of publication of application: **01.01.2014**
(21) Application number: 13165084.8
(22) Date of filing: 24.04.2013
(51) Int. Cl.: G06F 9/455

(54) **Security for TCP/IP-based access from a virtual machine to network attached storage by creating dedicated networks, MAC address authentification and data direction control**

(30) Priority: 29.06.2012 JP 2012147630
(71) Applicant: FUJITSU LIMITED, Kawasaki-shi, Kanagawa 211-8588 (JP)
(72) Inventor: Goto, Ichiro, Kanagawa, 211-8588 (JP)
(74) Representative: HOFFMANN EITLE

(57) **Abstract**

A storage system management program causes a computer (2) to execute, identifying a first port (341) connected to a storage device (4), which transmits and receives packets with multiple information processing apparatuses (111-113) via data transmitting devices (32), out of ports of a data transmitting device (34) adjacent to the storage device (4), identifying a second port (321) connected to a predetermined information processing apparatus (111) in the multiple information processing apparatuses (111-113) out of ports of a data transmitting device (32) adjacent to the predetermined information processing apparatus (111), and setting the first and second ports (341,321) to be permitted transmission and receipt of packet between the predetermined information processing apparatus (111) and the storage device (4).

## Description

### FIELD

The embodiments discussed herein are directed to a storage system management program, a storage system management device, and a method of managing a storage system.

### BACKGROUND

With the increase in the number of servers used and the development of server virtualization technology, environments using common storage have increased. Technologies for a system using such common storage include a storage area network (SAN). As SAN technologies, Fibre Channel storage area network (FC-SAN) and Internet protocol storage area network (IP-SAN) have been proposed in recent years.

The FC-SAN uses a Fibre Channel Protocol to connect between storage and servers. On the other hand, the IP-SAN uses an Internet Protocol to connect between storage and servers through use of an existing IP network. Communication standards used in the IP-SAN include iSCSI (internet Small Computer System Interface), etc. Furthermore, in the IP-SAN, Network Attached Storage (NAS) is sometimes used.

In recent years, with increasing use of the IP-SAN, there is a growing demand for ensuring of security for access to data stored in storage from a different server in a system using the IP-SAN. For example, in an environment where different users share servers A and B, in the IP-SAN, the servers A and B generally share the same network. In this case, the servers A and B both belong to the same network with respect to a network interface card (NIC) of storage. Therefore, risks for unintended data leakage and wiretapping exist between the servers A and B.

Incidentally, in regard to such IP-SAN, there is a conventional technology to manage an IP address, a port number, and a MAC address in association with one another. Furthermore, there is a conventional technology to filter a packet transmitted from a client so as not to transmit the packet to a router if a combination of a source IP address and a MAC address of a port included in the packet is different from a stored combination.

Patent document 1: Japanese Laid-open Patent Publication No. 2006-146767

Patent document 2: Japanese Laid-open Patent Publication No. 2001-36561

As a method to avoid the risks for unintended data leakage and wiretapping, networks can be separated by group subject to access management (hereinafter, referred to as "access group"), such as by server or by user who manages server(s). However, in an IP-SAN environment, a TCP (Transmission Control Protocol)/IP network is used as a storage network connecting storage and servers; therefore, it is difficult to separate networks by server.

Specifically, when storage networks are separated, an NIC of storage shared by multiple access groups belongs to multiple storage networks. Therefore, to separate storage networks in a system using the IP-SAN, the storage side has to support a virtual local area network (VLAN). However, currently, VLAN supporting storage has not been in widespread use. Therefore, it is difficult to ensure security for access from the multiple access groups just by separating storage networks.

As a method to separate networks, for example, automatic zoning setting for automatically setting an access path can be performed in the FC-SAN. However, in the IP-SAN, it is difficult to perform such automatic zoning setting.

Furthermore, even by use of the conventional technology to manage an IP address and a port number in association with each other, it is difficult to ensure security for access from a different access group. Moreover, in the conventional technology to perform filtering based on a combination of an IP address and a MAC address of a port, it is possible to restrict improper access from a server; however, it is difficult to ensure security for access from a different access group.

Accordingly, it is an object in one aspect of an embodiment of the invention to provide a storage system management program, a storage system management device, and a method of managing a storage system capable of easily ensuring security for access from a different access group, such as a different server or user.

### SUMMARY

According to an aspect of an embodiment, a computer-readable recording medium has stored therein a storage system management program causing a computer to execute a process which includes, identifying a first port connected to a storage device, which transmits and receives packets with multiple information processing apparatuses via data transmitting devices, out of ports of a data transmitting device adjacent to the storage device, identifying a second port connected to a predetermined information processing apparatus in the multiple information processing apparatuses out of ports of a data transmitting device adjacent to the predetermined information processing apparatus, and setting the first and second ports to be permitted transmission and receipt of packet between the predetermined information processing apparatus and the storage device.

### BRIEF DESCRIPTION OF DRAWINGS

FIG. 1 is a block diagram of a storage system;
FIG. 2 is a block diagram illustrating details of an operations management server according to a first embodiment;
FIG. 3 is a diagram of an example of a management table;
FIG. 4 is a flowchart of an entire process from network setting to operation;
FIG. 5 is a flowchart of an automatic security setting process;
FIG. 6 is a block diagram illustrating details of an operations management server and LAN switches according to a second embodiment;
FIG. 7 is a diagram of an example of a MAC address table;
FIG. 8 is a flowchart of a port identifying process in the second embodiment; and
FIG. 9 is a hardware configuration diagram of the operations management server.

### DESCRIPTION OF EMBODIMENTS

Preferred embodiments of the present invention will be explained with reference to accompanying drawings. Incidentally, the storage system management program, the storage system management device, and the method of managing the storage system according to the present invention are not limited to the embodiments described below.

### [a] First Embodiment

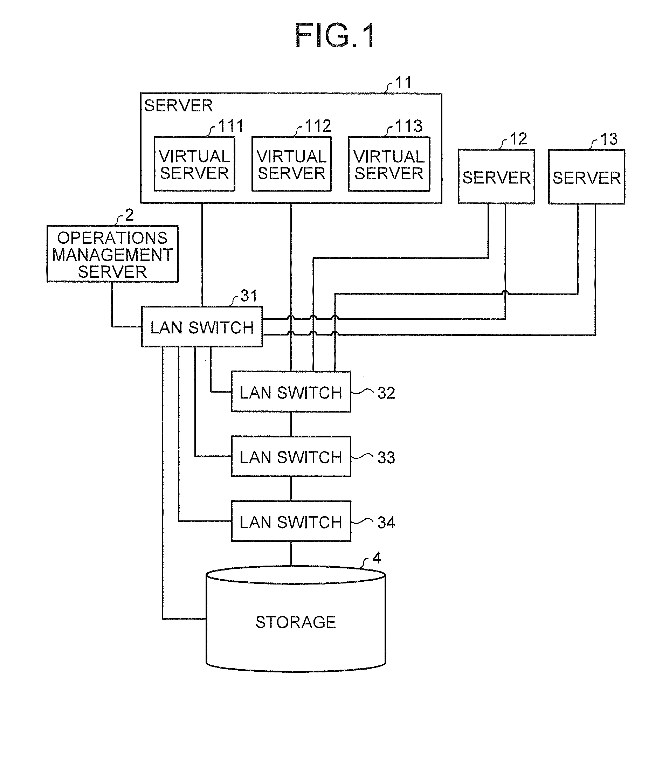

FIG. 1 is a block diagram of a storage system. As illustrated in FIG. 1, the storage system includes servers 11 to 13, an operations management server 2, local area network (LAN) switches 31 to 34, and a storage 4. In the present embodiment, the devices support Link Layer Discovery Protocol (LLDP). The LLDP is a neighbor search protocol designed to inform device information, thereby recognizing a neighboring device and checking the connection status, etc.

In the present embodiment, there is described on the basis that a virtual server 111 is using the storage 4 and virtual servers 112 and 113 are not using the storage 4. Furthermore, there is described on the basis that the server 12 is using the storage 4 and the server 13 is not using the storage 4.

In the storage system according to the present embodiment, the servers 11 to 13 are connected to the storage 4 via the LAN switches 32 to 34. The operations management server 2 and the server 11 transmit and receive packets via the switch 31. Furthermore, the operations management server 2 and the storage 4 transmit and receive packets via the switches 31, 33, and 34. In FIG. 1, three servers are illustrated; however, there is no particular limitation of the number of servers placed on a network. Furthermore, there is no particular limitation of the number of LAN switches to which the servers are connected. Moreover, in FIG. 1, only one storage 4 is illustrated; however, multiple storages can be placed. When a certain device is connected to a particular device without involving any other devices, such as LAN switches, such a situation is hereinafter described as "a certain device is adjacent to a particular device". Furthermore, a device adjacent to a certain device and a device connected to a certain device via another device are all referred to as a "device connected to a certain device". Namely, it can be said that the servers 11 to 13 are adjacent to the LAN switch 32, and are connected to the LAN switches 31 to 34 and the storage 4.

The server 11 includes the virtual servers 111 to 113. The virtual servers 111 to 113 each have a virtual network card, and the respective virtual network cards are assigned different MAC addresses. The virtual servers 111 to 113 can communicate with the storage 4 via the LAN switches 32 to 34 by using a network card installed on the server 11. For convenience of explanation, the virtual servers 111 to 113 are referred to as being adjacent to the LAN switch 31 adjacent to the server 11. Furthermore, the virtual servers 111 to 113 are referred to as being connected to the LAN switches 31 to 34 and the storage 4. The server 11 has a network card connected to the LAN switch 31 in addition to a network card connected to the LAN switch 32. The virtual servers 111 to 113 and the servers 11 to 13 are examples of "information processing apparatuses".

The operations management server 2 executes management software and manages the storage system. The function of the operations management server 2 will be described in detail later. In the present embodiment, the operations management server 2 separates a network for operations management of the server 11 from a storage network; however, the operations management server 2 can be configured to manage the server 11 using the same network as the storage network. The operations management server 2 is an example of a storage system management device. Furthermore, the management software executed by the operations management server 2 is an example of software including the function of a storage system management program according to the present embodiment.

The LAN switches 31 to 34 are Layer 2 (L2) switches. The LAN switches 31 to 34 establish communication using a protocol based on the iSCSI standard or the like.

The LAN switches 32 to 34 hold LLDP information. The LAN switches 32 to 34 support LLDP. The LAN switches 32 to 34 acquire LLDP information from an adjacent device. The LLDP information includes information indicating a correspondence between a MAC address of a device adjacent to the LAN switch and a port to which the device is connected. The LAN switches 31 to 34 are an example of a "data management device".

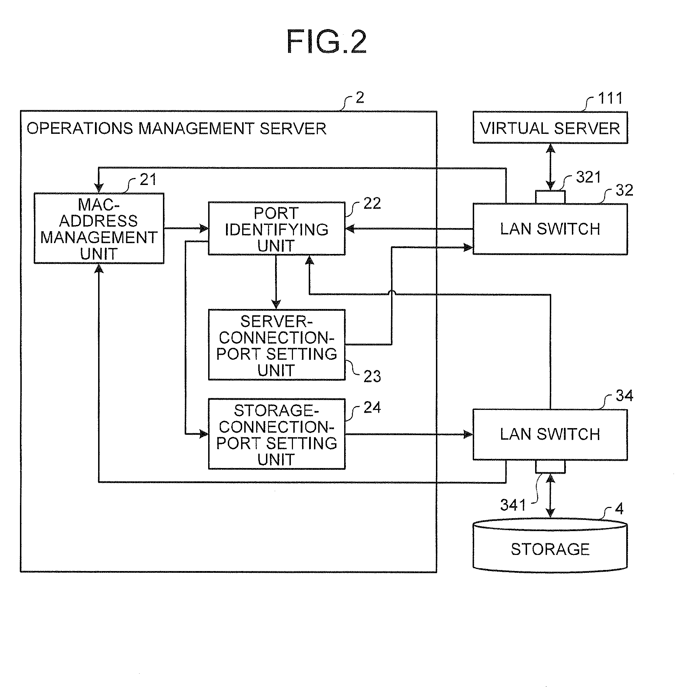

FIG. 2 is a block diagram illustrating details of the operations management server according to the first embodiment. As illustrated in FIG. 2, the operations management server 2 according to the present embodiment includes a MAC-address management unit 21, a port identifying unit 22, a server-connection-port setting unit 23, and a storage-connection-port setting unit 24. In FIG. 2, for convenience of explanation, only the virtual server 111, the LAN switches 32 and 34, and the storage 4 are illustrated.

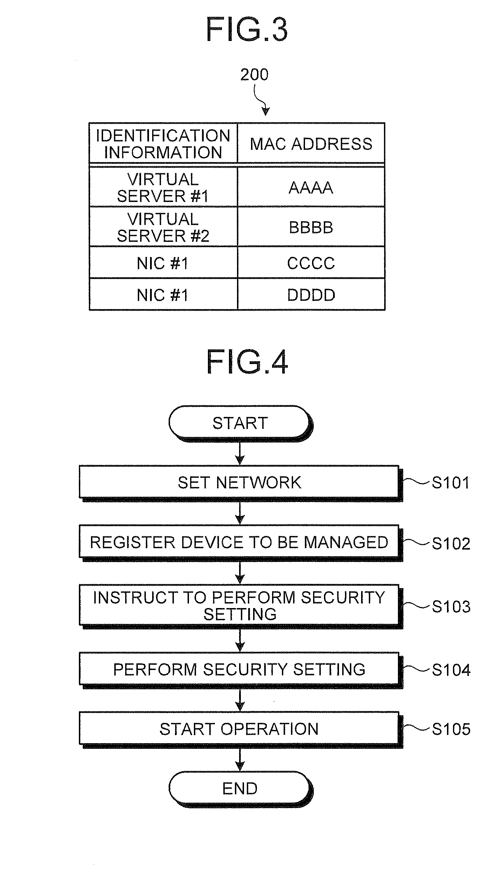

The MAC-address management unit 21 receives registration of a management IP address of an object to be managed from an operator, such as a system administrator (hereinafter, simply referred to as an "operator"). In the present embodiment, for example, the servers 11 to 13, the virtual servers 111 to 113, the LAN switches 32 to 34, and the storage 4 are objects to be managed. Then, the MAC-address management unit 21 acquires identification information of a network card that a device having the management IP address uses in the storage network and a MAC address of the network. For example, using a Simple Network Management Protocol (SNMP) or a Telecommunication Network (TELNET), the MAC-address management unit 21 acquires a variety of information from the device having the management IP address. The network card of which the information is acquired by the MAC-address management unit 21 includes a virtual network card. Then, using the acquired information, the MAC-address management unit 21 creates a management table indicating MAC addresses corresponding to network cards. FIG. 3 is a diagram of an example of the management table. As illustrated in FIG. 3, a management table 200 includes, for example, a MAC address in each of network cards including virtual network cards and identification information of the network card in a corresponding manner.

The port identifying unit 22 receives an instruction to set security between the storage 4 and the virtual server 111 from an operator, such as a system administrator. At this time, the port identifying unit 22 receives input of identification information of a virtual network card used by the virtual server 111 for access to the storage 4 from the operator. This identification information is, for example, an IP address or name, etc. assigned to the virtual network card of the virtual server. On the other hand, when an object of security setting is not a virtual server but a server, the port identifying unit 22 acquires an identifier of a network card. The port identifying unit 22 receives input of an identification information of a network card used by the storage 4 for access from the virtual server 111 from the operator. This identification information is, for example, an IP address or name, etc. assigned to the network card of the storage.

Then, the port identifying unit 22 acquires a MAC address corresponding to the identification information of the virtual network card of the virtual server 111 from the management table held by the MAC-address management unit 21. Furthermore, the port identifying unit 22 acquires a MAC address corresponding to the identification information of the network card of the storage 4 from the management table held by the MAC-address management unit 21.

Furthermore, the port identifying unit 22 acquires LLDP information held by the LAN switches 32 to 34. Then, using the MAC addresses of the devices specified as objects to be managed, the port identifying unit 22 identifies respective LAN switches adjacent to the specified devices and ports to which the specified devices are connected from the acquired LLDP information. In the present embodiment, the port identifying unit 22 identifies the LAN switch 32 as a LAN switch adjacent to the virtual server 111, and further identifies a port 321 connected to the virtual server 111 out of ports of the LAN switch 32. Furthermore, the port identifying unit 22 identifies the LAN switch 34 as a LAN switch adjacent to the storage 4, and further identifies a port 341 connected to the storage 4 out of ports of the LAN switch 34. The port 321 connected to the virtual server 111 out of ports of the LAN switch 32 adjacent to the virtual server 111 is hereinafter referred to as the "server connection port 321". This server connection port 321 is an example of a "second port". Furthermore, the port 341 connected to the storage 4 out of ports of the LAN switch 34 adjacent to the storage 4 is hereinafter referred to as the "storage connection port 341". This storage connection port 341 is an example of a "first port".

Then, the port identifying unit 22 notifies the server-connection-port setting unit 23 of identification information of the server connection port 321 of the LAN switch 32. Furthermore, the port identifying unit 22 notifies the storage-connection-port setting unit 24 of identification information of the storage connection port 341 of the LAN switch 34.

The server-connection-port setting unit 23 receives the identification information of the server connection port 321 of the LAN switch 32 from the port identifying unit 22. Then, the server-connection-port setting unit 23 sets the server connection port 321 of the LAN switch 32 to be permitted receipt of only data from the MAC address of the virtual network card of the virtual server 111. Specifically, the server-connection-port setting unit 23 sets the server connection port 321 by registering which operation the server connection port 321 is permitted on an access control list (ACL) held by the LAN switch 32.

The server-connection-port setting unit 23 further sets the server connection port 321 to be permitted only the MAC address of the virtual network card of the virtual server 111 as a destination of data from the server connection port 321. Also in this setting, the server-connection-port setting unit 23 sets the server connection port 321 by registering which operation the server connection port 321 is permitted on the ACL held by the LAN switch 32.

In the present embodiment, a MAC address permitted receipt and a MAC address permitted as a destination are specified; however, contents of access control are not limited to these, and the access control can be made by use of any other information as long as the information can be used for access control in a port. For example, the server-connection-port setting unit 23 can set the server connection port 321 of the LAN switch 32 to be permitted transmission of only data from the MAC address of the network card of the storage 4 to the virtual server 111.

Here, the server-connection-port setting unit 23 sets a limitation of a source of data received by the server connection port 321 and a limitation of a destination of data transmitted from the server connection port 321. However, contents of the limitations can be changed according to a level of security. For example, the server-connection-port setting unit 23 can set only the limitation of a source of data received by the server connection port 321. Furthermore, the server-connection-port setting unit 23 can set only the limitation of a destination of data transmitted from the server connection port 321.

Furthermore, as described above, when another limitation, such as a limitation of a source of data to be transmitted from the server connection port 321 to the virtual server 111, is used as other access control, contents of the limitations can be changed according to a combination with another limitation.

The storage-connection-port setting unit 24 receives the identification information of the storage connection port 341 of the LAN switch 34 from the port identifying unit 22. Then, the storage-connection-port setting unit 24 sets the storage connection port 341 of the LAN switch 34 to be permitted receipt of only data from the MAC address of the network card of the storage 4. Specifically, the storage-connection-port setting unit 24 sets the storage connection port 341 by registering which operation the storage connection port 341 is permitted on an ACL held by the LAN switch 34.

The storage-connection-port setting unit 24 further sets the storage connection port 341 of the LAN switch 34 to be permitted transmission of data from MAC addresses of all servers that use the storage 4 to the storage 4. In the present embodiment, the storage-connection-port setting unit 24 sets the storage connection port 341 of the LAN switch 34 to be permitted transmission of data from MAC addresses of network cards of the virtual servers 111 and 112 and the server 12 to the storage 4. Furthermore, the storage-connection-port setting unit 24 sets the storage connection port 341 to be permitted only the MAC address of the storage 4 as a destination of data from the storage connection port 341. Also in these settings, the storage-connection-port setting unit 24 sets the storage connection port 341 by registering which operation the storage connection port 341 is permitted on the ACL held by the LAN switch 34.

The storage-connection-port setting unit 24 sets a limitation of a source of data received by the storage connection port 341, a limitation of a source of data to be transmitted from the storage connection port 341 to the storage 4, and a limitation of a destination of data transmitted from the storage connection port 341. However, the limitations can be changed according to a level of security. For example, the storage-connection-port setting unit 24 can set only the limitation of a source of data received by the storage connection port 341. Furthermore, the storage-connection-port setting unit 24 can set the limitation of a source of data received by the storage connection port and a limitation of a source of data to be transmitted from the storage connection port 341 to the storage 4. Moreover, the storage-connection-port setting unit 24 can set the limitation of a source of data received by the storage connection port 341 and the limitation of a destination of data transmitted from the storage connection port 341.

With that, the setting of security between the virtual server 111 and the storage 4 by the operations management server 2 is completed. After that, the virtual server 111 and the storage 4 perform communication according to the settings on the ACLs of the LAN switches 32 and 34.

By limiting a source of data received by the server connection port 321 to the virtual server 111 only, data from the virtual servers 112 and 113 is not output from the server connection port 321. Therefore, it is possible to prevent unnecessary data output and enhance security. Furthermore, by limiting a destination of data transmitted from the server connection port 321 to the virtual server 111 only, it is possible to prevent data from being incorrectly received by another server. Moreover, also in regard to the setting of the storage connection port 341 for security of the storage 4, the same effect can be achieved.

Furthermore, as described above as another limitation, a source of data to be transmitted from the server connection port 321 to the virtual server 111 can be limited to the storage 4. This can prevent the server connection port 321 from transmitting data from another device connected to the LAN switch 32 to the virtual server 111. Consequently, it is possible to prevent the virtual server 111 from receiving, for example, information of another device connected to the LAN switch 32 incorrectly.

Subsequently, the flow of an entire process from network setting to operation in the storage system according to the present embodiment is explained with reference to FIG. 4. FIG. 4 is a flowchart of the entire process from network setting to operation.

An operator sets a network to use the storage 4, the LAN switches 31 to 34, and the servers 11 to 13 (Step S101). For example, the operator performs the settings of the virtual servers 111 to 113 and the assignment of IP addresses or management IP addresses to the servers 11 to 13, the LAN switches 32 to 34, and the virtual servers 111 to 113, etc.

Then, the operator registers a device to be managed in management software executed by the operations management server 2 (Step S102). In the present embodiment, the operator registers, for example, management IP addresses of the virtual servers 111 and 112, the server 13, the LAN switches 32 to 34, and the storage 4 in the management software.

Then, the operator specifies which server and which storage and instructs the management software of the operations management server 2 to set security between the specified server and the specified storage (Step S103). In the present embodiment, the operator instructs to set security between the virtual server 111 and the storage 4.

The operations management server 2 executes the security setting between the virtual server 111 and the storage 4 (Step S104). The detail of this security setting will be explained next.

After completion of the security setting, the operator starts operation to use a resource of the storage 4 in the virtual server 111 using the IP-SAN (Step S105).

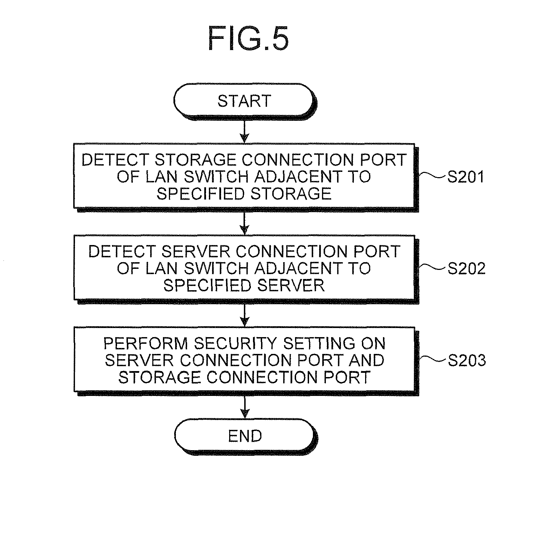

Subsequently, the flow of an automatic security setting process performed by the operations management server 2 is explained with reference to FIG. 5. FIG. 5 is a flowchart of the automatic security setting process.

The port identifying unit 22 acquires a MAC address of the network card of the storage 4 specified as an object to be managed from the management table held by the MAC-address management unit 21. Then, the port identifying unit 22 acquires LLDP information held by the LAN switches 32 to 34. Then, using the MAC address of the network card of the storage 4, the port identifying unit 22 detects the LAN switch 34 adjacent to the storage 4 and the storage connection port 341 of the LAN switch 34 from the acquired LLDP information (Step S201). Then, the port identifying unit 22 notifies the storage-connection-port setting unit 24 of identification information of the detected storage connection port 341 of the LAN switch 34.

Furthermore, the port identifying unit 22 acquires a MAC address of the virtual network card of the virtual server 111 specified as an object to be managed from the management table held by the MAC-address management unit 21. Then, using the MAC address of the virtual network card of the virtual server 111, the port identifying unit 22 detects the LAN switch 32 adjacent to the virtual server 111 and the server connection port 321 of the LAN switch 32 from the acquired LLDP information (Step S202). Then, the port identifying unit 22 notifies the server-connection-port setting unit 23 of identification information of the detected server connection port 321 of the LAN switch 32.

Then, the server-connection-port setting unit 23 and the storage-connection-port setting unit 24 perform security setting on the server connection port 321 and the storage connection port 341, respectively (Step S203). For example, the storage-connection-port setting unit 24 sets the storage connection port 341 so that a source of data received by the storage connection port 341 is limited to the storage 4 only. Furthermore, the storage-connection-port setting unit 24 sets the storage connection port 341 so that a destination of data transmitted from the storage connection port 341 is limited to the storage 4 only. The server-connection-port setting unit 23 sets the server connection port 321 so that a source of data received by the server connection port 321 is limited to the virtual server 111 only. Furthermore, the server-connection-port setting unit 23 sets the server connection port 321 so that a destination of data transmitted from the server connection port 321 is limited to the virtual server 111 only.

In FIG. 5, for convenience of explanation, a storage connection port is detected at Step S201, and a server connection port is detected at Step S202; however, the order of these processes can be shuffled, or these processes can be concurrently performed.

The operations management server 2 has a storage system management program for performing the process illustrated in FIG. 5. This storage system management program can be stored in a storage unit included in the operations management server 2. Furthermore, the storage system management program can be stored in a compact disk (CD) or a digital versatile disk (DVD), etc., and the operations management server 2 can read out and execute the storage system management program stored in the CD or DVD.

As described above, the storage system management program and storage system management device according to the present embodiment set security in a storage connection port of a LAN switch adjacent to a storage and a server connection port of a LAN switch adjacent to a server that uses the storage in an IP-SAN environment. Consequently, security for communication between a different access group, such as a different server or user, and the storage can be easily ensured. Accordingly, in an access path for a pair of a server and a storage in an IP-SAN environment using iSCSI/NAS or the like, security setting equivalent to zoning in FC/FCoE (Fiber Channel over Ethernet (registered trademark)) can be performed. Then, security between access groups is ensured by performed the security setting; therefore, it is possible to reduce risks for data leakage and wiretapping.

### [b] Second Embodiment

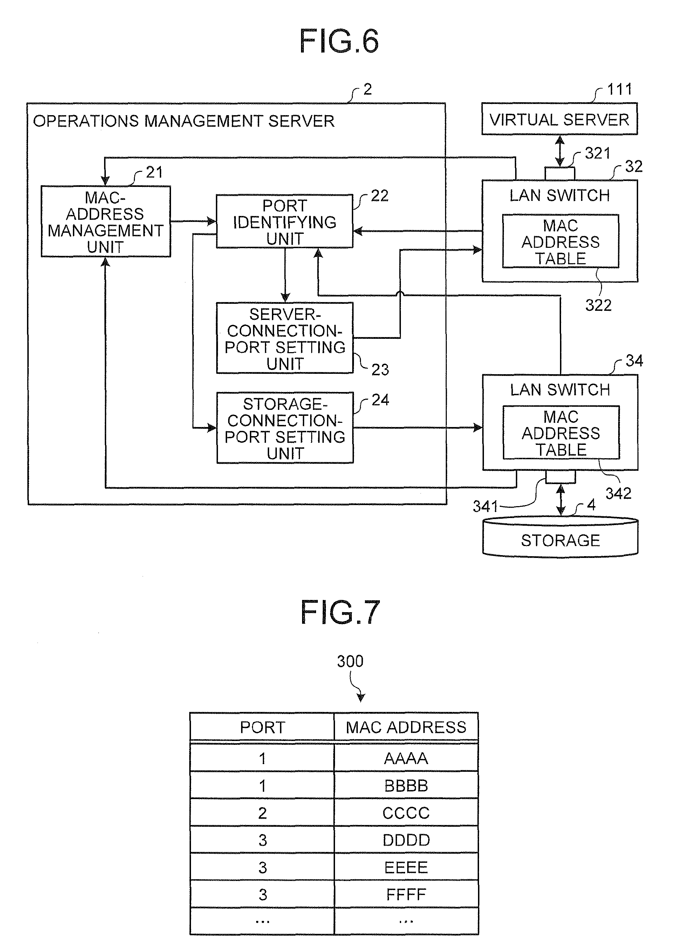

Subsequently, a second embodiment is explained. The second embodiment differs from the first embodiment in that a storage system management program and storage system management device according to the present embodiment are applied to a system which does not support LLDP. A storage system according to the present embodiment has the same configuration as in FIG. 1. Also in the present embodiment, there is described on the basis that an operator specifies setting of security for communication between the virtual server 111 and the storage 4. FIG. 6 is a block diagram illustrating details of an operations management server and LAN switches according to the second embodiment. Description of a unit having the same function as in the first embodiment is omitted.

In the case where LLDP is not supported, the LAN switches 32 to 34 hold no LLDP information; therefore, it is difficult for the port identifying unit 22 to identify LAN switches adjacent to the virtual server 111 and the storage 4 using LLDP information. So, the port identifying unit 22 identifies LAN switches adjacent to the virtual server 111 and the storage 4 by a different method from the first embodiment, and identifies a server connection port and a storage connection port.

The LAN switches 32 to 34 acquire a device connected to a port thereof and a MAC address of the connected device by communicating with the device, and learn which port and which device are connected. Then, the LAN switches 32 to 34 register the learned information in a MAC address table indicating the correspondence between a port and a device connected to the port. For example, in the present embodiment, as illustrated in FIG. 6, the LAN switch 32 holds a MAC address table 322, and the LAN switch 34 holds a MAC address table 342. Here, only the LAN switches 32 and 34 are illustrated; however, the other LAN switches also hold a MAC address table.

FIG. 7 is a diagram of an example of the MAC address table. In a MAC address table 300, a MAC address of a device connected to a port that a LAN switch has and identification information of the port are registered in a corresponding manner.

Upon receipt of an instruction to perform security setting, the port identifying unit 22 acquires information of the MAC address tables held by the LAN switches 32 to 34. For example, in FIG. 6, the port identifying unit 22 acquires information of the MAC address table 322 from the LAN switch 32. Furthermore, the port identifying unit 22 acquires information of the MAC address table 342 from the LAN switch 34.

Then, the port identifying unit 22 collectively stores the acquired information registered in the MAC address tables in a storage area of the port identifying unit 22.

Then, the port identifying unit 22 acquires a MAC address corresponding to identification information of the virtual network card of the virtual server 111 specified as an object to be managed from the management table held by the MAC-address management unit 21. Furthermore, the port identifying unit 22 acquires a MAC address corresponding to identification information of the network card of the storage 4 specified as an object to be managed from the management table held by the MAC-address management unit 21.

Then, using the information registered in the MAC address tables of the LAN switches 32 to 34, the port identifying unit 22 creates a list of ports of LAN switches which hold the MAC address of the virtual network card of the virtual server 111.

When the number of ports included on the created list is one, the port identifying unit 22 identifies the port as a server connection port of a LAN switch adjacent to the virtual server 111.

On the other hand, when the number of ports included on the created list is two or more, the port identifying unit 22 compares the number of learned MAC addresses among the ports on the list. Then, when the number of ports holding the fewest number of learned MAC addresses is one, the port identifying unit 22 identifies the port as a server connection port of a LAN switch adjacent to the virtual server 111.

This is because it is considered that with increasing distance from a device, the number of connections from other devices to ports connected to the device becomes increased. For example, in FIG. 1, a port connected to the virtual server 111 out of ports of the LAN switch 32 has learned three MAC addresses of the virtual servers 111 to 113. Respective ports connected to the virtual server 111 out of ports of the LAN switches 33 and 34 have learned MAC addresses of the servers 12 and 13 in addition to the three MAC addresses of the virtual servers 111 to 113. In this manner, the port connected to the virtual server 111 in the LAN switch 32 adjacent to the virtual server 111 has learned fewer MAC addresses than the ports connected to the virtual server 111 in the other LAN switches. Therefore, in this case, the port identifying unit 22 can determine that the LAN switch 32 is adjacent to the virtual server 111, and can identify a server connection port.

On the other hand, when there are multiple ports which hold the fewest number of learned MAC addresses (hereinafter, referred to as the "fewest ports"), the port identifying unit 22 determines whether the setting of communication between LAN switches has been made in each of the fewest ports. Then, the port identifying unit 22 identifies the fewest port in which the setting of communication between LAN switches has not been made as a server connection port of a LAN switch adjacent to the virtual server 111.

Ports in which the setting of communication between data transmitting devices has been made include, for example, a trunk port which is set to be permitted passage of all packets, a port subject to Spanning Tree Protocol (STP) which is a communication protocol for avoiding a loop configuration, a port used in link aggregation which is setting for connecting LAN switches via multiple communication lines thereby broadening the frequency band, and a port opposed to a port having the LLDP function. The reason why these conditions are used is because these conditions are likely to be used in communication between LAN switches, so a port meeting any of these conditions is likely to be a port connecting between LAN switches. The port identifying unit 22 identifies a port meeting none of these conditions out of the fewest ports as a server connection port of a LAN switch adjacent to the virtual server 111. In the present embodiment, the conditions of any of a trunk port, a port subject to STP, a port used in link aggregation, and an LLDP opposed port are used as settings of communication between LAN switches; however, some of the conditions can be selected and used. Furthermore, any other condition can be used as long as the condition is for identifying a server connection port of a LAN switch adjacent to a device.

Furthermore, using the information registered in the MAC address tables of the LAN switches 32 to 34, the port identifying unit 22 identifies a storage connection port of the LAN switch 34 adjacent to the storage 4. The port identifying unit 22 identifies a storage connection port in the same procedure as in the identification of a server connection port described above.

Then, the port identifying unit 22 transmits information on the server connection port of the LAN switch 32 adjacent to the virtual server 111 to the server-connection-port setting unit 23. Furthermore, the port identifying unit 22 transmits information on the storage connection port of the LAN switch 34 adjacent to the storage 4 to the storage-connection-port setting unit 24.

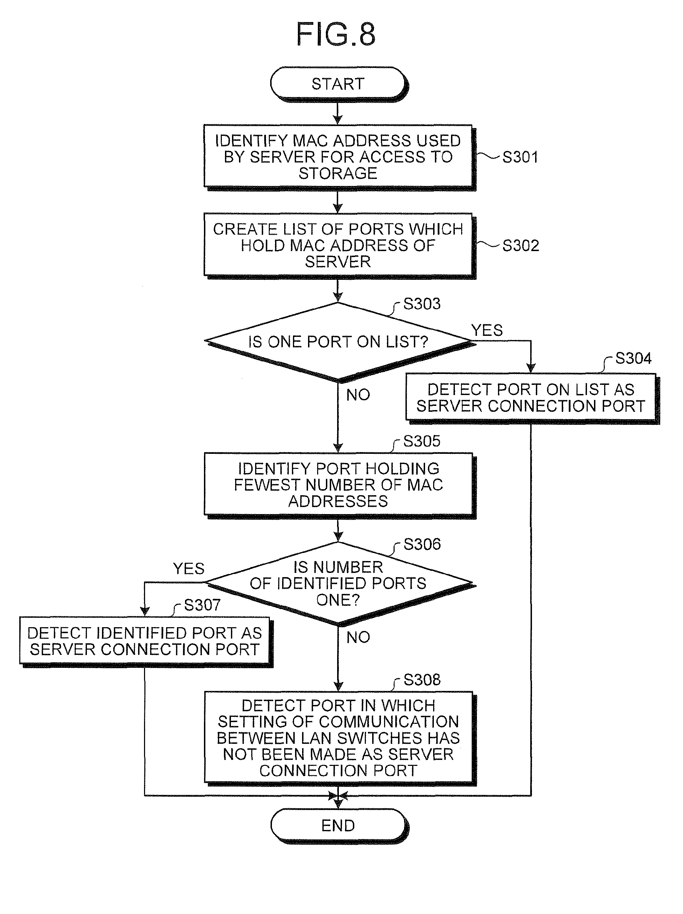

Subsequently, the flow of a port identifying process according to the present embodiment is explained with reference to FIG. 8. FIG. 8 is a flowchart of the port identifying process in the second embodiment. FIG. 8 illustrates the process in a case of identifying a server connection port of a LAN switch adjacent to a server which uses the storage 4. Here we explain the port identifying process without specifying a server.

The port identifying unit 22 acquires identification information of a network card of a server subject to security setting. Then, using the management table held by the MAC-address management unit 21, the port identifying unit 22 identifies a MAC address of the network card used by the server for access to the storage 4 (Step S301). The MAC address of the network card used by the server for access to the storage 4 is hereinafter simply referred to as "the MAC address of the server".

Furthermore, the port identifying unit 22 acquires information stated in the MAC address tables held by the LAN switches 32 to 34 from the LAN switches 32 to 34. Then, using the information stated in the MAC address tables, the port identifying unit 22 creates a list of ports which hold the MAC address of the server (Step S302).

Then, the port identifying unit 22 determines whether the number of ports included on the created list is one (Step S303). When the number of ports included on the list is one (YES at Step S303), the port identifying unit 22 detects the port on the list as a server connection port (Step S304).

On the other hand, when the number of ports included on the list is two or more (NO at Step S303), the port identifying unit 22 identifies a port holding the fewest number of MAC addresses from the list (Step S305).

Then, the port identifying unit 22 determines whether the number of ports holding the fewest number of MAC addresses is one (Step S306). When the number of ports holding the fewest number of MAC addresses is one (YES at Step S306), the port identifying unit 22 detects the identified port as a server connection port (Step S307).

On the other hand, when there are multiple ports holding the fewest number of MAC addresses (NO at Step S306), the port identifying unit 22 detects a port in which the setting of communication between LAN switches has not been made out of the identified ports as a server connection port (Step S308).

As described above, even for a storage system which does not support LLDP, the storage system management program and storage system management device according to the present embodiment can identify an adjacent data transmitting device, and can identify a port directly connected to the device. Consequently, even in a non-LLDP supporting storage system using IP-SAN, security for communication between a different access group, such as a different server or user, and storage can be easily ensured.

### Hardware Configuration

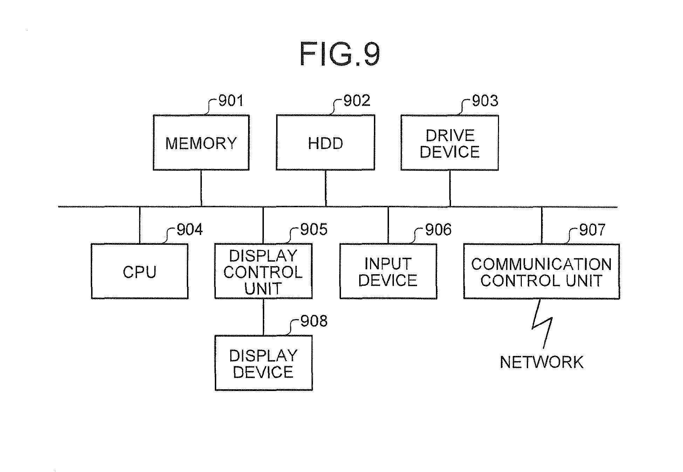

FIG. 9 is a hardware configuration diagram of the operations management server. The operations management server 2 according to the above-described embodiments has a hardware configuration illustrated in FIG. 9.

The operations management server 2 includes a memory 901, a hard disk drive (HDD) 902, a drive device 903, a central processing unit (CPU) 904, a display control unit 905, an input device 906, a communication control unit 907, and a display device 908.

The memory 901, the HDD 902, the drive device 903, the display control unit 905, the input device 906, and the communication control unit 907 are connected to the CPU 904 by a bus.

The storage system management program according to each embodiment can be stored in the HDD 902, or the storage system management program stored in a CD or a DVD can be read by the drive device 903. Here, it will be assumed that the storage system management program is stored in the HDD 902.

Upon receipt of a command from the CPU 904, the display control unit 905 displays data on the display device 908, such as a monitor. For example, the display control unit 905 displays an entry screen of management software or the like on the display device 908.

The input device 906 is, for example, a keyboard or the like, and an operator performs input to the operations management server 2 through use of the input device 906.

The communication control unit 907 is connected to a network connected to LAN switches, etc. The communication control unit 907 establishes communication with the storage 4.

The CPU 904 and the memory 901 implement the functions of the MAC-address management unit 21, the port identifying unit 22, the server-connection-port setting unit 23, and the storage-connection-port setting unit 24, etc. illustrated in FIG. 2. Specifically, the CPU 904 reads out the storage system management program, which implements the functions of the MAC-address management unit 21, the port identifying unit 22, the server-connection-port setting unit 23, and the storage-connection-port setting unit 24, etc. illustrated in FIG. 2, from the HDD 902. Then, the CPU 904 expands a process for implementing the above-described functions onto the memory 901, and executes the process.

According to an aspect of the present invention, it is possible to easily ensure security for access from a different access group, such as a different server or user.

## Claims

1. A storage system management program causing a computer (2) to execute:
identifying a first port (341) connected to a storage device (4), which transmits and receives packets with multiple information processing apparatuses (111-113) via data transmitting devices (32), out of ports of a data transmitting device (34) adjacent to the storage device (4);
identifying a second port (321) connected to a predetermined information processing apparatus (111) in the multiple information processing apparatuses (111-113) out of ports of a data transmitting device (32) adjacent to the predetermined information processing apparatus (111); and
setting the first and second ports (341,321) to be permitted transmission and receipt of packet between the predetermined information processing apparatus (111) and the storage device (4).

2. The storage system management program according to claim 1, wherein the setting the first and second ports (341,321) includes
setting the first port (341) to be permitted receipt of only packet whose source is a MAC address of the storage device (4); and
setting the second port (321) to be permitted receipt of packet whose source is a MAC address of the predetermined information processing apparatus (111).

3. The storage system management program according to claim 1 or 2, wherein the setting the first and second ports (341,321) includes
setting the first port (341) to be permitted transmission of only packet whose sources are MAC addresses of the multiple information processing apparatuses (111-113) to the storage device (4); and
setting the second port (321) permission to be permitted transmission of only packet whose source is a MAC address of the storage device (4) to the predetermined information processing apparatus (111).

4. The storage system management program according to any one of claims 1 to 3, wherein the setting the first and second ports (341,321) includes
setting the first port (341) to be permitted only transmission of packet to the storage device (4); and
setting the second port (321) to be permitted only transmission of packet to the predetermined information processing apparatus (111).

5. The storage system management program according to any one of claims 1 to 4, wherein
the predetermined information processing apparatus (111) is a virtual server,
the second port (341) is shared by multiple virtual servers including (111-113) the predetermined information processing apparatus (111), and
the setting the first and second ports (341,321) includes setting the second port (321) to be permitted receipt of only packet whose source is a MAC address assigned to the virtual server which is the predetermined information processing apparatus (111).

6. The storage system management program according to any one of claims 1 to 5, wherein
the data transmitting device (32,34) includes multiple data transmitting devices, and each of the data transmitting devices (32,34) stores therein MAC addresses of an information processing apparatus (111) connected to a port thereof and the storage device (4), and
the identifying the second port (321) includes extracting data transmitting devices (32) which have stored therein a MAC address of the predetermined information processing apparatus (111) and identifying a port connected to the predetermined information processing apparatus (111) in any of the extracted data transmitting devices (31,32) which has stored the fewest number of MAC addresses as the second port (321).

7. The storage system management program according to claim 6, wherein the identifying the second port (321) includes, when there are multiple data transmitting devices (32,34) which have stored the fewest number of MAC addresses, determining whether setting of communication between data transmitting devices (32,34) has been made in each of respective ports connected to the MAC address of the predetermined information processing apparatus (111) in the data transmitting devices (32,34) which have stored the fewest number of MAC addresses and identify a port in which the setting of communication between data transmitting devices (32,34) has not been made as the second port (321).

8. A storage system management device (2) comprising:
a port identifying unit (22) that identifies a first port (341) connected to a storage device (4), which transmits and receives packets with multiple information processing apparatuses (111-113) via data transmitting devices (32), out of ports of a data transmitting device (34) adjacent to the storage device (4) and a second port (321) connected to a predetermined information processing apparatus (111) in the multiple information processing apparatuses (111-113) out of ports of a data transmitting device (32) adjacent to the predetermined information processing apparatus (111);
a first security setting unit (23) that sets the first port (321) to be permitted transmission and receipt of packet between the predetermined information processing apparatus (111) and the storage device (4); and
a second security setting unit (24) that sets the second port (341) to be permitted transmission and receipt of packet between the predetermined information processing apparatus (111) and the storage device (4).

9. A method of managing a storage system, the method comprising:
identifying a first port (341) connected to a storage device (4), which transmits and receives packets with multiple information processing apparatuses (111-113) via data transmitting devices (32), out of ports of a data transmitting device (34) adjacent to the storage device (4);
identifying a second port (321) connected to a predetermined information processing apparatus (111) in the multiple information processing apparatuses (111-113) out of ports of a data transmitting device (32) adjacent to the predetermined information processing apparatus (111); and
setting the first and second ports (341,321) to be permitted transmission and receipt of packet between the predetermined information processing apparatus (111) and the storage device (4).
